# EUROPÄISCHE PATENTANMELDUNG

(11) **EP 0 823 394 A2**
(43) Veröffentlichungstag der Anmeldung: **11.02.1998**
(21) Anmeldenummer: 97113034.9
(22) Anmeldetag: 29.07.1997
(51) Int. Cl.: B66C 13/06

(54) **Anordnung zur ein- oder mehrdimensionalen Bestimmung der Position eines Lastaufnahmepunktes bei Hebezeugen**

(30) Priorität: 05.08.1996 DE 19631623
(71) Anmelder: SIEMENS AKTIENGESELLSCHAFT, 80333 München (DE)
(72) Erfinder: Doemens, Günter, Dr., 83607 Holzkirchen (DE); Wichner, Wolfgang, 90530 Wendelstein (DE)

(57) **Zusammenfassung**

Das Anhalten einer an einem Kran hängenden Last erfordert eine Pendelregelung bzw. eine Pendeldämpfung. Unter Einsatz von Mikrowellenmeßeinheiten werden auf der Basis von Laufzeitmessungen Abstände 41, 51, 61 zwischen einer Tragseilaufhängung 7 und einem Lastangriffspunkt 1 bestimmt. Daraus ist die Position des Lastangriffspunktes 1 schnell und mit hoher Genauigkeit bestimmbar. Durch geregelte Gegensteuerung der Tragseilaufhängung 7 werden Pendelbewegungen vermieden.

## Beschreibung

Die Erfindung betrifft die Positionsbestimmung von an einem Tragseil hängenden Lasten an Hebezeugen, die durch entsprechende Stellantriebe ein- oder mehrdimensional bewegt werden.

Das Anhalten eines Kranes bzw. der an dem Kran hängenden Last über einem Absetzpunkt verursacht normalerweise ein Überschwingen bzw. Pendeln dieser Last. Die daraus resultierende Zeitverzögerung für den Absetzvorgang führt zu einer deutlichen Verlängerung der gesamten Transportzeit der Last. Pendelungen bzw. Schwingungen der Last können jedoch durch entsprechend gegenphasig ausgeführte Bewegungen der Laufkatze bzw. des Kranes oder der Stellantriebe ganz oder teilweise ausgeregelt werden. Hierzu ist die ständige Positionsmessung des Lastaufnahmemittels notwendig, wobei zweckmäßigerweise ein definierter Punkt, der Lastaufnahmepunkt betrachtet wird. Im allgemeinen Fall muß die laterale Position in der x- und y-Richtung des Weltkoordinatensystems mit einer Genauigkeit von unter +/- 1 cm von der Laufkatzenebene aus bestimmt werden. Die damit verbundene Meßzeit sollte wenige Millisekunden nicht überschreiten. Derartige Messungen werden in der Regel berührungslos durchgeführt und führen zu einer Positionsbestimmung im Raum. Diese Messungen werden jedoch durch bestimmte Umgebungsbedingungen, wie Temperatur, Regen, Schnee, Dunkelheit oder helles Sonnenlicht und ähnliches gestört.

Derzeit bekannte Verfahren für eine Pendelregelung der obengenannten Art werden entweder durch eine opto-elektronische Erfassung der Lastaufnahmeposition oder über eine Pendelwinkelmessung mit mechanischen oder magnetischen Meßmitteln in der Nähe der Seilaufhängung im Betrieb der Laufkatze durchgeführt. Bei der zuletzt genannten Methode können jedoch Seilwellen erheblich das Meßergebnis verfälschen. Bei der erstgenannten opto-elektronischen Methode wird die Erfassung der Lastaufnahmeposition durch die Umweltbedingungen beeinträchtigt. Somit ist die Zuverlässigkeit dieser beiden Verfahren nicht immer gewährleistet. Darüber hinaus bereitet eine zweidimensionale Positionsbestimmung innerhalb weniger Millisekunden Schwierigkeiten. Zur besseren Erkennung des Lastaufnahmemittels für die optoelektronische Methode werden zwar mittlerweile optische Reflektoren oder Infrarotlichtquellen angewandt, die jedoch die Nachteile des genannten Verfahrens nicht ausräumen können.

Der Erfindung liegt die Aufgabe zugrunde, eine Anordnung zur Bestimmung der Position einer an einem Tragseil eines Hebezeuges laufenden Last zur Verfügung zu stellen. Diese Positionsbestimmung sollte ständig und störungsfrei funktionieren und die Grundlage für eine Pendeldämpfung sein.

Die Lösung der genannten Aufgabe geschieht durch die jeweiligen Merkmale der Ansprüche 1 bis 4 und 9, wobei die Mikrowellenentfernungsmessung eingesetzt wird und auf der Grundlage der gleichen Aufgabe verschiedene Problemlösungsfälle beschrieben werden.

Der Erfindung liegt die Erkenntnis zugrunde, daß mit dem Einsatz der Mikrowellenentfernungsmeßtechnik für eine Positionsbestimmung der Last bei Hebezeugen wesentliche Vorteile erzielbar sind. Der besondere Vorteil liegt dabei in der von den Umgebungsbedingungen ungestörten Ausbreitung der Mikrowellen. Darüber hinaus ist eine hohe Genauigkeit bei der Entfernungsmessung erzielbar und die Meßzeiten sind extrem kurz. Die Mikrowellenentfernungsmessung basiert auf Laufzeitmessuungen der ausgesendeten und wieder empfangenen Signale. Der Frequenzbereich liegt zwischen 1 und 100 GHz. Ein Mikrowellensender sendet eine Kugelwelle aus, die von einem korrespondierenden Empfänger empfangen wird. Wird ein Mikrowellensignal über einen sog. Retroreflektor umgelenkt, so reflektiert dieser wiederum eine Kugelwelle.

Ausgehend von einer lateral, d.h. in x- und y-Richtung bewegbaren Tragseilaufhängung wird beim Verfahren einer an dem Tragseil hängenden Last beim Anhalten immer eine Pendelung auftreten. Die erfindungsgemäße Anordnung sieht vor, daß Mikrowellenmeßeinheiten angebracht werden, durch die Abstandsmessungen zwischen Tragseilaufhängung und Lastaufnahmepunkt ausführbar sind, wobei die ungefähren Meßrichtungen einen endlichen Winkel mit dem Tragseil bilden. Diese Mikrowellenmeßeinheiten sind einerseits mit bekannter Position relativ zur Tragseilaufhängung und anderer seits mit bekannter Position relativ zum Lastaufnahmepunkt angeordnet. Es gilt für eine Positionsmessung des Lastaufnahmepunktes den Winkel zwischen dem Tragseil und den Meßrichtungen entsprechend der Mikrowellenmeßeinheiten optimal zu gestalten. Die Mikrowellenmeßeinheiten sind je nach Einsatzfall in ungefähr gleichen Abständen um das Tragseil herum angeordnet.

Entsprechend der Erfindung kann die Mikrowellenmeßtechnik an Hebezeugen vorteilhaft eingesetzt werden, wobei die Positionsbestimmung des Lastaufnahmepunktes je nach Anwendungs- oder Einsatzfall ein-, zwei- oder dreidimensional geschieht. Entsprechend wird die Ausstattung der erfindungsgemäßen Anordnung eine unterschiedliche Anzahl von Mikrowellenmeßeinheiten aufweisen.

Durch den Einsatz von mindestens drei Mikrowellenmeßeinheiten kann die Position des Lastaufnahmepunktes dreidimensional bestimmt werden. In diesem System werden jeweils drei Entfernungen auf der Basis von Laufzeitmessungen bestimmt. Die Position des Lastaufnahmepunktes errechnet sich dann aus dem Schnittpunkt der drei Kugelflächen mit den Radien, die der Entfernung zwischen Sender und Empfänger bzw. Sender/Empfangerkombination und Retroreflektor entsprechen, und den Mittelpunkten, die jeweils durch die Positionen der Sender bzw. Sende- und Empfangskombinationen dargestellt werden. Nachdem für übliche Hebezeuge eine Dämpffung der Schwingung des Lastaufnahmepunktes im wesentlichen für laterale Bewegungen in Frage kommt, besteht die Möglichkeit die Erfassung der z-Richtung, d.h. die Höhenkoordinate, als Ersatz für eine Mikrowellenmeßeinheit durch eine Messung der Länge des Tragseiles zu erhalten. In diesem Fall würden neben der Seillängenmessung zwei Mikrowellenmeßeinheiten eingesetzt. Beim Einsatz von drei Mikrowellenmeßeinheiten wird jedoch die Höhe des Lastaufnahmepunktes zuverlässiger bestimmt als durch eine Seillängenmessung.

Für den Fall, daß sich der Lastaufnahmepunkt lediglich eindimensional hin- und zurückbewegen kann, wird die Positionsmessung des Lastaufnahmepunktes zunächst zwei Mikrowellenmeßeinheiten erfordern. Hierzu ist erforderlich, daß die Verbindungsgerade der beiden Sende- bzw. Sende- und Empfangseinheiten in der Pendelrichtung des Lastaufnahmepunktes liegt. Zumindest sollte die Verbindungsgrade parallel zur Pendelrichtung sein. Mit dieser Lösungsvariante kann ein zweidimensional in einer senkrecht stehenden Ebene bewegbarer Lastaufnahmepunkt vermessen werden.

Eine ebenfalls zweidimensionale Positionsvermessung für den Lastaufnahmepunkt ergibt sich, wenn mittels einer in der Bewegungsebene des Lastaufnahmepunktes liegenden Mikrowellenmeßeinheit und der Seillängenmessung die Position des Lastaufnahmepunktes bestimmt wird. Nachdem wiederum zur praktischen Pendeldämpfung der Höhenwert nicht direkt von Bedeutung ist, kann dessen Bestimmung durch die Längenmessungg des Tragseiles bewerkstelligt werden. Da die Auslenkung eines Tragseiles mit maximal 6° angesetzt werden kann, wird die Pendeldämpfung quasi-linear durchgeführt. Das Wissen über den Höhen-Wert (z-Koordinate) ist jedoch zum genauen Absetzen der Last verwendbar.

Im folgenden werden anhand von schematischen Figuren Ausführungsbeispiele beschrieben.
Figur 1 zeigt eine erfindungsgemäße Mikrowellenmeßanordnung zur dreidimensionalen Bestimmung des Lastaufnahmepunktes,
Figur 2 zeigt eine erfindungsgmäße Mikrowellenmeßanordnung mit zwei Mikrowellenmeßeinheiten, wobei durch zusätzliche Seillängenmessung eine dreidimensionale Bestimmung des Lastaufnahmepunktes erzielbar ist,
Figur 3 zeigt eine erfindungsgemäße Mikrowellenmeßanordnung zur zweidimensionalen Positionsbestimmung des Lastaufnahmepunktes unter Einsatz von zwei Mikrowellenmeßeinheiten,
Figur 4 zeigt eine Anordnung entsprechend Figur 3, wobei eine Mikrowellenmeßeinheit durch die Seillängenmessung ersetzt ist.

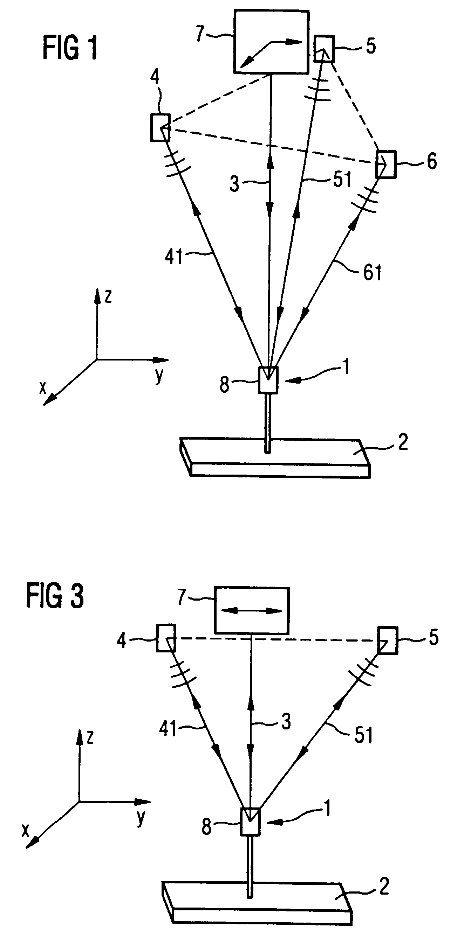

Die Figur 1 zeigt eine Tragseilaufhängung 7 mit einem Tragseil 3 und einem Lastangriffspunkt 1. Die Tragseilaufhängung 7 ist zweidimensional in ebenen x/y-Richtungen verfahrbar. Eine Höhenverfahrbarkeit der Last 2 ist durch Auf- und Abwickeln des Tragseiles 3 in der Tragseilaufhängung 7 gegeben. Die zur Tragseilaufhängung 7 seitlich beabstandeten Sender/Empfänger-Kombinationen 4, 5, 6, strahlen in Richtung auf den oder die Retroreflektoren 8 jeweils ein Mikrowellensignal ab, das als Kugelwelle ausgebildet ist. Am Retroreflektor 8 wird diese jeweils reflektiert und an der jeweiligen Sender/Empfänger-Kombination 4, 5, 6 empfangen. Dies bildet die Grundlage für eine Laufzeitmessung und Abstandsbestimmung für die Abstände 41, 51, 61. Die Kombinationen 4, 5, 6 und die entsprechenden Retroreflektoren bestimmen durch ihre Lage pro Mikrowellenmeßeinheit jeweils die Richtung, in der der Abstand gemessen werden soll. Mittels der beschriebenen Auswertung über sich schneidende Kugelflächen deren Mittelpunkt jeweils die Kombinationen 4, 5, 6 darstellen, wird die Position des Lastaufnahmepunktes ermittelt und im Anschluß daran eine gegenphasige Bewegung für die Tragseilaufhängung 7 angesteuert, so daß eine Pendeldämpfung des schwingenden Lastaufnahmepunktes 1 erfolgt. Die Messung kann im Millisekundenbereich geschehen mit einer Genauigkeit von +/- 1 cm, wodurch eine ständige Positionsbestimmung möglich ist. Entsprechend kann iterativ oder sukzessive die Pendeldämpfung bis zum Stillstand des Lastaufnahmepunktes 1 bzw. der Last 2 weitergeführt werden oder eine rechtzeitige Regelung verhindert eine Pendelung von Anfang an . Werden entsprechend Figur 1 drei Mikrowellenmeßeinheiten 4 - 8, 5 - 8, 6 - 8 eingesetzt, so läßt sich neben der zweidimensionalen Pendeldämpfung zusätzlich die Höhenkoordinate z ermitteln. Diese wird ansonsten relativ ungenau über die Seillängenmessung bestimmt. Eine einheitliche Ausgestaltung des Retroreflektors 8 kann beispielsweise zugleich sämtliche drei Mikrowellenmeßeinheiten bedienen. Zur Differenzierung der unterschiedlichen Meßeinheiten können unterschiedliche Frequenzen eingesetzt werden.

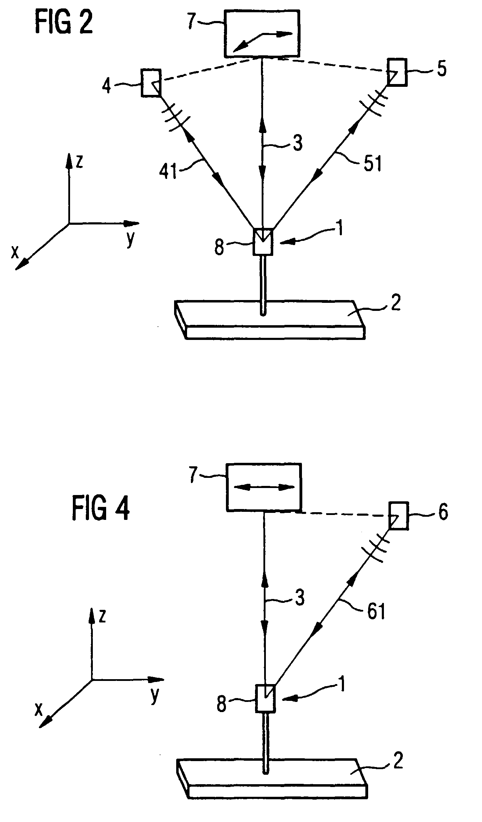

In der Figur 2 ist die Tragseilaufhängung 7 ebenfalls zweidimensional in ebenen Richtungen verfahrbar. Der Lastaufnahmepunkt 1 ist dreidimensional bestimmbar. Die Sender/Empfängerkombinationen 4, 5 sind analog zu Figur 1 zu Meßeinheiten mit dem Retroreflektor 8 ausgebildet, wobei sie nicht auf einer Geraden liegen, die gleichzeitig durch die Tragseilaufhängung 7 geht. Die Länge des Tragseiles 3 wird mechanisch gemessen. Somit ist mittels einer Anordnung entsprechend Figur 2 ebenfalls eine dreidimensionale Positionsbestimmung und zumindest eine zweidimensionale in ebenen Richtungen wirkende Pendeldämpfung, sowie eine Höhenbestimmung des Lastaufnahmepunktes 1 erzielbar.

Die Figuren 3 und 4 weisen im Gegensatz zu den Figuren 1 und 2 wesentliche Einschränkungen bezüglich der Freiheitsgrade auf. Die Tragseilaufhängung 7 ist lediglich eindimensional in Hin- und in Gegenrichtung verfahrbar. Entsprechend kann der Lastaufnahmepunkt 1 mit der Last 2 lediglich in einer senkrecht stehenden Ebene pendeln. Diese Pendelung kann durch entsprechende gegenphasige Antriebssteuerung in der Tragseilaufhängung 7 gedämpft werden, wobei die ständige Ermittelung der Position des Lastaufnahmepunktes 1 wiederum teilweise oder vollständig mittels der Mikrowellenmeßtechnik geschieht.

In Figur 3 sind zwei Mikrowellenmeßeinheiten im Einsatz, die Einheiten 4 - 8 und 5 - 8. Die Sender/Empfänger-Kombinationen 4, 5 entsprechend Figur 3 liegen in der Bewegungsebene des Lastaufnahmepunktes 1 oder anders ausgedrückt, auf einer Geraden durch die Tragseilaufhängung 7 auf gegenüberliegenden Seiten des Tragseiles 3 und in der Pendelebene . Mit der Anordnung nach Figur 3 läßt sich eine eindimensionale Pendelung des Lastaufnahmepunktes 3 ermitteln und ausgleichen. In einem noch weiter vereinfachten Fall kann über die Seillängenmessung eine Mikrowellenmeßeinheit ersetzt werden, so daß entsprechend Figur 4 nur noch eine einzige Mikrowellenmeßeinheit vorhanden ist. In Figur 4 muß die Sender/Empfängerkombination 6 ebenfalls in der Pendelebene des Lastaufnahmepunktes 1 liegen.

Die unterschiedlichen in den Figuren 1 bis 4 dargestellten Varianten der Erfindung liefern wahlweise eine hohe Meßgenauigkeit, wenn vollständig über Mikrowellenmeßeinheiten gemessen wird. Falls die Seillängenmessung am Tragseil 3 zu Hilfe genommen wird, was einer mechanischen Messung gleichkommt, sind Einbußen hinsichtlich der Genauigkeit zu erwarten. Eine typische Frequenz für eine Mikrowellenmeßeinheit ist beispielsweise 24 GHz und eine Taktzeit für die Messungen liegt beispielsweise bei 10 ms.

Unter gleichzeitiger oder teilweise alternativer Verwendung von zentralen Ortungssystemen läßt sich beispielsweise eine Referenzmarke außerhalb eines Kranbereiches ausnutzen. Somit kann unter Berücksichtigung der zeitlichen und der technischqualitativen, d. h. der Messgenauigkeiten, Möglichkeiten verschiedener Ortungssysteme eine optimale Abstimmung vorgenommen werden.

Wird z. B. ein hallengebundenes Ortungssystem verwendet, so ist es denkbar, zentral die Position der Tragseilaufhängung (7) zu bestimmen, separat zur ebenfalls zentralen Bestimmung der Position des Lastaufnahmepunktes (1). Dabei kann das zentrale Ortungssystem auf das kraninterne Ortungssystem in einer beliebigen Form adaptiert werden. Wesentliches Kriteriun für eine Aufgabenverteilung zwischen dem kraninternen und dem zentralen Ortungs- bzw. Positioniersystem ist neben der Messgenauigkeit auch die zeitliche Verfügbarkeit, verbunden mit der Geschwindigkeit der Signalauswertung. So ist beispielsweise ein heutiges GPS-System nur mit einer Genauigkeit von wenigen Metern verbunden und die relativ hohe Anzahl von zur Verfügung stehenden Satelliten kann trotzdem keine ständige Verfügbarkeit garantieren.

Da für eine Ausgestaltung der Erfindung sicher eine Genauigkeit im Dezimeterbereich gewünscht ist, ist eine Verwendung von in einer Halle angebrachten Ortungssystemen realistisch. Dabei sind die Entfernungsunterschiede zwischen Messgerät und Messobjekt nicht derart gross wie bei satellitengestützten Systemen und die Messgenauigkeit bei einer Positionsmessung von einer Gebäudewand zu einem Kran bzw. zu dessen Last ist ausreichend gut. Mit weiterer Genauigkeitssteigerung bei GPS-Systemen ist aber deren Einsatz ebenfalls sinnvoll.

## Patentansprüche

1. Vorrichtung zur dreidimensionalen Bestimmung der Position eines Lastaufnahmepunktes (1) von Hebezeugen, mit denen Lasten (2) an einem Tragseil (3) hängend mittels entsprechender Stellantriebe durch zweidimensionale Bewegungen einer Tragseilaufhängung (7) in ebener x- und y- Richtung und durch Heben oder Senken des Tragseiles (3) in vertikaler z-Richtung dreidimensional verfahrbar sind, bestehend aus mindestens drei Mikrowellen-Meßeinheiten mit jeweils einem Mikrowellensender und einem dazu beabstandeten korrespondierenden Mikrowellenempfänger zur Messung ihres gegenseitigen Abstandes, durch Mikrowellenentfernungsmessung, wobei jeweils ein Bestandteil der drei Mikrowellen-Meßeinheiten an relativ zur Tragseilaufhängung (7) bekannten Positionen und der jeweils andere Bestandteil der Mikrowellenmeßeinheiten an relativ zum Lastaufnahmepunkt (1) bekannten Positionen angeordnet ist, die Mikrowellenmeßeinheiten annäherend gleichmäßig um das Tragseil verteilt sind und ihre ungefähren Ausrichtungen einen Winkel mit dem Tragseil (3) bilden.

2. Vorrichtung zur dreidimensionalen Bestimmung der Position eines Lastaufnahmepunktes (1) von Hebezeugen mit denen Lasten (2) an einem Tragseil (3) hängend mittels entsprechender Stellantriebe durch zweidimensionale Bewegungen einer Tragseilaufhängung (7) in ebener x- und y- Richtung und durch Heben oder Senken des Tragseiles (3) in vertikaler z-Richtung dreidimensional verfahrbar sind, bestehend aus zwei Mikrowellen-Meßeinheiten mit jeweils einem Mikrowellensender und einem dazu beabstandeten korrespondierenden Mikrowellenempfänger zur Messung ihres gegenseitigen Abstandes durch Mikrowellenentfernungsmessung in Kombination mit der Längenmessung des Tragseiles (3), wobei jeweils ein Bestandteil der zwei Mikrowellenmeßeinheiten an relativ zur Tragseilaufhängung (7) bekannten Positionen und der jeweils andere Bestandteil der Mikrowellenmeßeinheiten an relativ zum Lastaufnahmepunkt (1) bekannten Positionen angeordnet ist, die Mikrowellenmeßeinheiten nicht auf gegenüberliegenden Seiten des Tragseiles (3) angeordnet sind und ihre ungefähren Ausrichtungen einen Winkel mit dem Tragseil (3) bilden.

3. Vorrichtung zur zweidimensionalen Bestimmung der Position eines Lastaufnahmepunktes (1) von Hebezeugen, mit denen Lasten (2) an einem Tragseil (3) hängend mittels entsprechender Stellantriebe durch eindimensionale Bewegungen einer Tragseilaufhängung (7) in ebener x- oder y- Richtung und durch Heben oder Senken des Tragseiles (3) in z- Richtung zweidimensional verfahrbar sind, bestehend aus zwei Mikrowellenmeßeinheiten mit jeweils einem Mikrowellensender und einem dazu beabstandeten korrespondierenden Mikrowellenempfänger zur Messung ihres gegenseitigen Abstandes, durch Mikrowellenentfernungsmessung, wobei jeweils ein Bestandteil der zwei Mikrowellen-Meßeinheiten an relativ zur Tragseilaufhängung (7) bekannten Positionen und der jeweils andere Bestandteil der Mikrowellenmeßeinheit an relativ zum Lastaufnahmepunkt (1) bekannten Positionen angeordnet ist, die Mikrowellenmeßeinheiten in der Bewegungsebene des Lastaufnahmepunktes (1) relativ zum Tragseil (3) gegenüberliegend angeordnet sind und ihre ungefähren Ausrichtungen einen Winkel mit dem Traggseil (3) bilden.

4. Vorrichtung zur zweidimensionalen Bestimmung der Position eines Lastaufnahmepunktes (1) von Hebezeugen, mit denen Lasten (2) an einem Tragseil (3) hängend mittels ensprechender Stellantriebe durch eindimensionale Bewegungen einer Tragseilaufhängung (7) in ebener x- oder y-Richtung und durch Heben oder Senken des Tragseiles (3) in vertikaler z-Richtung zweidimensional verfahrbar sind, bestehend aus einer Mikrowellenmeßeinheit mit einem Mikrowellensender und einem dazu beabstandeten korrespondierenden Mikrowellenempfänger zur Messung ihres gegenseitigen Abstandes, durch Mikrowellenentfernungsmessung in Kombination mit der Längenmessung des Tragseiles (3), wobei ein Bestandteil der Mikrowellen-Meßeinheit an relativ zur Tragseilaufhängung (7) bekannter Position und der andere Bestandteil der Mikrowellenmeßeinheit an relativ zum Lastaufnahmepunkt (1) bekannter Position angeordnet sind, die Mikrowellen-Meßeinheit in der Bewegungsebene des Lastaufnahmepunktes (1) angeordnet ist und ihre ungefähre Ausrichtung einen Winkel mit dem Tragseil (3) bildet.

5. Vorrichtung nach einem der vorhergehenden Ansprüche, worin die Mikrowellensender mit den korrespondierenden Mikrowellenempfängern unmittelbar nebeneinander im Bereich der Tragseilaufhängung (7) an den bekannten Positionen angeordnet sind und im Bereich des Lastaufnahmepunktes (1) für jede Mikrowellenmeßeinheit ein Retroreflektor an der ursprünglichen Position eines Senders oder Empfängers positioniert ist.

6. Vorrichtung nach Anspruch 5, worin die Sende/Empfangs-Kombinationen im Bereich der Tragseilaufhängung (7) lateral von dieser beabstandet sind und die Retroreflektoren (8) unmittelbar am Lastaufnahmepunkt (1) angeordnet sind.

7. Vorrichtung nach Anspruch 6, worin für mehrere Mikrowellenmeßeinheiten ein einziger Retroreflektor (8) am Lastaufnahmepunkt (1) vorgesehen ist.

8. Vorrichtung nach einem der vorhergehenden Ansprüche, worin mehrere Mikrowellenmeßeinheiten bei gleichzeitigem Betrieb unterschiedliche Frequenzen aufweisen.

9. Vorrichtung nach einem der vorhergehenden Ansprüche, worin ein zentrales Ortungssystem vorhanden ist, mit dem die Position der Tragseilaufhängung (7) und/oder die Position des Lastaufnahmepunktes (1) bestimmbar ist.

10. Vorrichtung nach Anspruch 9, worin das zentrale Ortungssystem den Bereich eines Gebäudes oder eines abgegrenzten Geländes bedient.

11. Vorrichtung nach Anspruch 9, worin das zentrale Ortungssystem ein Globales-Positionierungs-System (GPS) ist.

12. Verwendung der Anordnung nach einem der vorhergehenden Ansprüche, zur Pendeldämpfung bzw. zur Verhinderung von Schwingungen des Lastaufnahmepunktes (1) im Betrieb bzw. bei Beendigung einer lateralen Hebezeugbewegung auf der Grundlage der ständigen Positionsbestimmung des Lastaufnahmepunktes (1) relativ zur Tragseilaufhängung (7), wobei die Stellantriebe des Hebezeuges entsprechend geregelt werden.
